**Europäisches Patentamt**

**European Patent Office**

**Office européen des brevets**

(11) Veröffentlichungsnummer : **0 072 366**
**B1**

# (12) EUROPÄISCHE PATENTSCHRIFT

(45) Veröffentlichungstag der Patentschrift :
26.06.85

(21) Anmeldenummer : 82890112.4

(22) Anmeldetag : 03.08.82

(51) Int. Cl.⁴ : **F 16 J 15/16, F 04 B 21/08**

(54) Dichtung zum Abdichten von Hochdruckeinrichtungen.

(30) Priorität : 05.08.81 AT 3448/81

(43) Veröffentlichungstag der Anmeldung :
16.02.83 Patentblatt 83/07

(45) Bekanntmachung des Hinweises auf die Patenterteilung : 26.06.85 Patentblatt 85/26

(84) Benannte Vertragsstaaten :
BE CH DE FR GB IT LI LU NL SE

(56) Entgegenhaltungen :
AT-B-  296 700
DE-A- 2 739 745
DE-U- 7 535 535
FR-A-  793 168
GB-A- 1 008 347

(73) Patentinhaber : **VEREINIGTE EDELSTAHLWERKE
AKTIENGESELLSCHAFT (VEW)**
**Elisabethstrasse 12**
**A-1010 Wien (AT)**

(72) Erfinder : **Schier, Walter**
**Theodor-Körner-Strasse 23**
**A-8600 Bruck/Mur (AT)**

(74) Vertreter : **Widtmann, Georg, Dr.**
**Vereinigte Edelstahlwerke Aktiengesellschaft (VEW)**
**Elisabethstrasse 12**
**A-1010 Wien (AT)**

## Beschreibung

Die Erfindung betrifft eine Dichtung zum Abdichten von in Bohrungen druckbelastbarer Einrichtungen bewegbaren Teilen, wobei Abdichten von Hochdruckeinrichtungen, vorzugsweise von oszillierend bewegten Plungern bzw. Verdrängerkolben von Hochdruck-Pumpen oder von rotierenden Wellen von Hochdruck-Apparaturen erreicht wird.

Es ist eine Hochdruckdichtung für Verdrängerkolben von Kolbenpumpen bekannt, die durch eine metallische Hülse gebildet ist, die den Verdrängerkolben in einer Pumpenkopfbohrung mit Abstand zu der Wand der Pumpenkopfbohrung umgibt und am druckabwärtigen Ende einen Führungsflansch aufweist, der in einer im Vergleich zur Pumpenkopfbohrung erweiterten Einstichbohrung des Pumpenkopfes liegt, siehe z. B. DE-A-2 739 745.

Bei hohen Drucken im Bereich von mehreren tausend bar — wie sie insbesondere bei Pumpen für Flüssigkeits-Strahl-Schneideinrichtungen angewandt werden — hat sich die bekannte Hochdruck-Spalt-Dichtung als nicht ausreichend erwiesen ; die Spaltbüchse weist unterschiedliche Materialstärken auf, so daß es insbesondere bei stark schwankenden Druckbelastungen zu Material-Brüchen kommen kann. Außerdem sind die Standzeiten nicht zufriedenstellend.

Aus der FR-A-793 168 ist eine Dichteinrichtung zum Abdichten einer rotierenden Welle einer Kältemaschinenpumpe bekannt geworden, bei welcher in einer Ausnehmung einer eine Gehäusewand od. dgl. durchsetzenden Bohrung, in welcher die Welle angeordnet ist, eine den bewegbaren Teil umgebende metallische Hülse und ein mittels Anpreß-Einrichtung mit axialer Kraftwirkung beaufschlagbarer, zumindest einen Teilbereich des Außen-Mantels der Hülse umgebender, radiale Kraftwirkung ausübender Dichtungsring mit im wesentlichen rechteckigem oder quadratischem Querschnitt angeordnet sind. Diese bekannte Dichteinrichtung ist aufgrund ihrer Bauweise und der Materialwahl für einen Einsatz in Hochruckapparaturen ungeeignet, und es wurde daher eine solche Verwendung auch nie vorgeschlagen.

Aus der eigenen AT-B-296 700 sind zum Abdichten von zwischen zueinander nicht relativbeweglichen Gehäuseteilen dampfbetriebener Ventile für etwa 200 bar Druck vorhandenen Spalten Teflon-Ringe mit durch Metallringe verstärkten Kanten bekannt.

Der Erfindung liegt die Aufgabe zugrunde, eine Hochdruck-Dichtung — insbesondere für nichtschmierende Flüssigkeiten — der eingangs genannten Art zu schaffen, die eine zuverlässige Abdichtung ermöglicht, möglichst verschleißlos arbeitet, hohe Standzeiten aufweist und die Gefahr des Auftretens von Material-Brüchen ausschließt und bei welcher der Spalt zwischen Dichtung und beweglichem Teil, also abzudichtendem Plunger, Kolben oder Welle einstellbar bzw. regulierbar ist. Die Dichtungshülse soll keine abrupten Schwankungen in der Materialstärke und wesentlich geringere Baulänge aufweisen, als die oben beschriebenen, bisher für sehr große Drücke eingesetzten Konus-Spalt-Dichtungen, wobei deren Nachteile vermieden sein sollen.

Gegenstand der Erfindung ist eine Dichtung zum Abdichten von in Bohrungen druckbelastbarer Einrichtungen bewegbaren Teilen, wobei in einer Ausnehmung der jeweiligen Einrichtung eine den bewegbaren Teil umgebende metallische Hülse und ein mittels Anpreß-Einrichtung mit axialer Kraftwirkung beaufschlagbarer, zumindest einen Teilbereich des Außen-Mantels der Hülse umgebender, radiale Kraftwirkung ausübunder Dichtungsring mit im wesentlichen rechteckigem oder quadratischem Querschnitt angeordnet sind, die dadurch gekennzeichnet ist, daß zum Abdichten von Hochdruck-Einrichtungen, vorzugsweise zum Abdichten von oszillierend bewegten Plungern bzw. Kolben von Hochdruck-Pumpen oder von rotierenden Wellen von Hochdruck-Apparaturen, in, gegebenenfalls einer Ausnehmung, der Bohrung der Hochdruckeinrichtung ein, die den Plunger bzw. Kolben oder die Welle, vorzugsweise satt, umschließende, gleitfähige Dichtungshülse vollumfänglich umschließender Dichtungsring angeordnet ist, der zumindest an jenen Kanten, die an den unter Druck stehenden Spalten innerhalb der Hochdruck-Einrichtung angrenzen, mittels Kammerringen aus hochfestem Metall armiert ist.

Der die Dichtungshülse umschließende Dichtungsring wird also mit einer kontrollierbaren axialen Kraft beaufschlagt und übt seinerseits entsprechend dieser Kraft über den gesamten Umfang wirksame, nach innen zur Achse gerichtete radiale Kräfte auf die Dichtungshülse aus, welche dadurch ihr Spiel zum Plunger oder Welle verkleinert, wodurch die Dicke des Spaltes zwischen Hülse und Plunger bzw. Welle äußerst gering und einstellbar gehalten wird. Durch die Armierungsringe ist überraschenderweise trotz zueinander relativ beweglicher Teile selbst bei äußerst hohen Drucken ein Auskriechen des Dichtungsringes mit hoher Sicherheit verhindert. Dazu kommt, daß infolge der schrägen Flächen der Armierungen eine Art Konzentrierung der von der Axialkraftbeaufschlagung des Dichtungsringes gesteuerten Radialkraftbeaufschlagung der Hülse in Nähe der Mitte des Ringes und somit wesentlich verbesserter Abdichtungsgrad erreicht wird.

Mit der neuen Dichtung ist es möglich, die Leckage, die in erster Linie von der Spaltdicke abhängt, auch bei sehr hohen Drucken auf ein tolerier- und steuerbares Maß zu bringen bzw. auch auf Null, wenn die Werkstoffpaarung Hülse-Plunger einen Null-Spalt zuläßt, ohne ein Verreiben nach sich zu ziehen. Ein weiterer Vorteil des armierten plastischen Dichtringes um die Hülse ist der, daß sich die Dichtungshülse nach dem Plunger bzw. der Welle zentrieren kann und trotz Armierung auch geringfügige Bewegungen der Hülse vom Dichtring aufgenommen werden können, so daß auch dann die äußerst gering zu haltende Spaltdicke aufrechterhalten bleibt.

Bevorzugt weisen die Kammerringe des Dichtungsringes dreieckigen Querschnitt auf und sind vorzugsweise aus Stahl gefertigt.

Besonders überraschend hat sich gezeigt, daß bei Einbau der neuen Hochdruck-Dichtungen die Standzeiten wesentlich erhöht werden konnten.

Die Dichtungs-Hülse kann in einer zu ihrer Aufnahme vorgesehenen erweiterten Einstichbohrung in der Bohrung der Pumpen bzw. Apparatur angeordnet sein.

Um zumindest eine Querschnittsänderung in der Bohrung des — infolge der hohen Betriebs-Drucke hohen Belastungen ausgesetzten — Gehäuses, die zur Schaffung eines Platzes für die Dichtungshülse dient, zu vermeiden, ist es vorteilhaft, wenn in der gleichmäßigen Durchmesser aufweisenden Bohrung der Hochdruck-Einrichtung eine Hülse eingesetzt ist, die im wesentlichen ähnliche Querschnitts-Dimension aufweist, wie die Dichtungs-Hülse und an diese gegen das Innere der Hochdruck-Einrichtung anschließend angeordnet ist.

Soll jegliche Querschnittsänderung innerhalb der Bohrung der Hochdruck-Einrichtung im Bereich der Dichtungsstelle vermieden werden, wird vorgesehen, daß in der gleichmäßigen Durchmesser aufweisenden Bohrung der Hochdruck-Einrichtung eine Hülse eingesetzt ist, und daß im Bereich der Bohrung zwischen dem an die Dichtungs-Hülse angrenzenden Ende der Hülse und dem Dichtungsring eine Büchsenhülse angeordnet ist.

Die Dichtungs-Hülse ist bevorzugt aus Stahl oder aus einer Kupfer-Beryllium-Legierung.

Als Werkstoff für die Hülse haben sich Kupfer-Beryllium-Legierungen $CuBe_2$ bewährt.

Die Dichtungs-Hülse weist günstigerweise eine Länge auf, die gleich dem oder größer als ihr Innendurchmesser ist.

Weiters kann vorgesehen sein, daß die Dichtungshülse an ihrer Innenfläche quer zur Hülsenachse verlaufend, vorzugsweise etwa halbkreis- oder U-förmige Rillen aufweist. Damit wird außer der durch die Radialkräfte des Dichtungsringes auf die Dichtungs-Hülse bewirkten Anpassung der Abdichtung der Kolben- bzw. Wellen-Durchführung zusätzlich der Effekt einer Labyrinth-Dichtung erreicht; darüber hinaus können die Rillen zur Verteilung eines Schmiermittels dienen, so daß die Gleitwirkung erhöht wird.

Um den Effekt der erfindungsgemäßen Hochdruck-Dichtung noch zu erhöhen, kann die Dichtungshülse so gestaltet sein, daß sie einen gegen das Innere der Hochdruck-Einrichtung gerichteten, schwach konisch geformten, als Hochdruckkonus-Dichtung ausgebildeten Teil aufweist.

Bei dieser Ausführungsform der Hülse lassen sich die Vorteile der Konus-Hochdruck-Dichtung mit jenen der erfindungsgemäßen Hochdruck-Dichtung kombinieren, ohne daß die Nachteile der Konus-Dichtung in Kauf genommen werden müssen.

Der die auf ihn ausgeübten Axialkräfte in auf die Dichtungshülse ausgeübte Radialkräft umwandelnde Dichtungsring ist bevorzugt aus einem plastischen und/oder viskosen Material, vorzugsweise aus Kunststoff, gefertigt.

Als günstig für diesen Zweck haben sich Polymere auf Basis, gegebenenfalls fluorierter, Polyalkylene, besonders solche auf Basis von Polytetrafluoräthylen (PTFE) bzw. solche aus einem PTFE-Compound-Werkstoff erwiesen.

Gemäß einer besonderen Ausführungsform der Hochdruck-Dichtung ist vorgesehen, daß die auf den Dichtungsring axiale Krafteinwirkung ausübende Anpreßeinrichtung durch einen, vorzugsweise L-förmigen Querschnitt aufweisenden, Anpreßring und eine diesen gegen den Dichtungsring pressende, mit variabler Belastung beaufschlagbare Stopfbüchsen-Brille gebildet ist.

Dabei handelt es sich um eine bei Dichtungen seit langem angewandte und bewährte Konstruktion, die eine sehr genaue Einstellung der auf den Dichtungsring auszuübenden Radialkraft und damit auf die Dicke des Dichtungsspaltes ermöglicht.

Der Ring kann, insbesondere wenn an der Dicht-Stelle ein Schmiermittel eingebracht werden soll, an seiner Innenfläche eine, gegebenenfalls mehrere Dichtlippen umfassende, Lippendichtung tragen.

Zur Zuführung eines Schmiermittels können im Anpreßring an dessen Innenfläche mündende Kanäle für die Zufuhr eines Schmiermittels angeordnet sein.

Solche Schmiermittel-Kanäle können selbstverständlich allein oder zusätzlich auch an der Dichtungs-Hülse an deren Innenflächen mündend vorgesehen sein.

In einer Testanordnung wurde die erfindungsgemäße Dichtung in einer doppeltwirkenden Plungerpumpe für 3 000 bar Wasser erprobt.

Dabei waren folgende Werkstoffe eingesetzt :

Plunger : Hartmetall
Dichtungshülse : Kupfer-Beryllium
Dichtungsring : PTFE Compound
Kammerungsringe : rostfreier Stahl.

Die axiale Anzugskraft für den Dichtungsring entsprach einer Belastung des PTFE mit 4 000 kp/cm². Es hat sich gezeigt, daß noch wesentlich höhere Wasserdrucke im Bereich von 5 000 bis 6 000 bar mit dieser Dichtungsausführung zu beherrschen sind.

An Hand der Zeichnung sei die erfindungsgemäße Hochdruck-Dichtung näher erläutert :

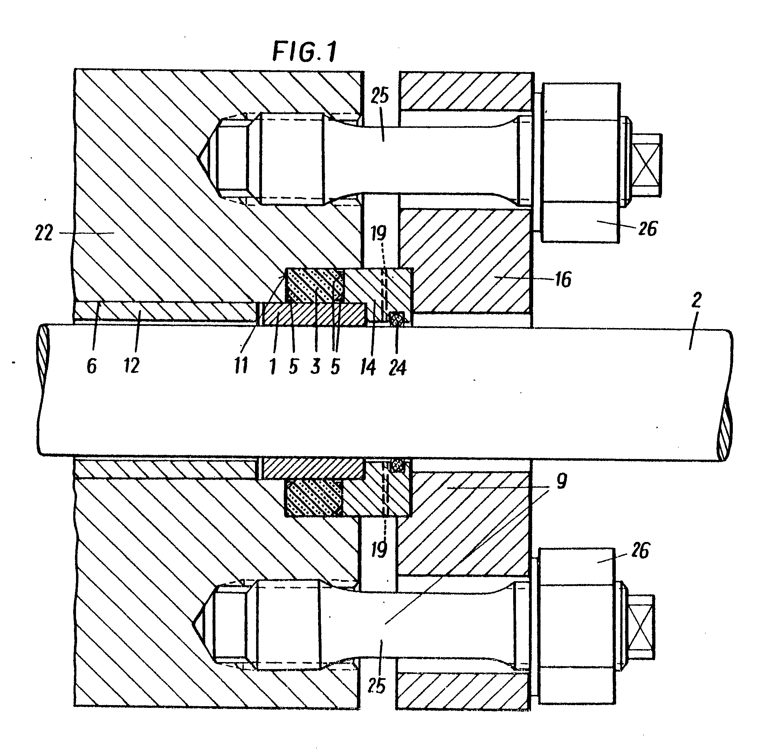

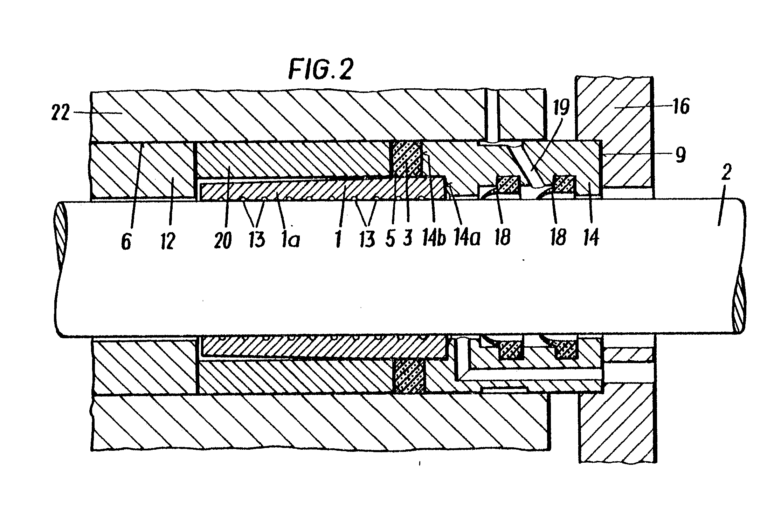

Fig. 1 ist ein Längs-Schnitt durch eine verhältnismäßig einfache Ausführungsform der erfindungsgemäßen Dichtung an einer Hochdruck-Plungerpumpe und Fig. 2 ein ebensolcher Schnitt durch eine andere, mit zusätzlichem, nach Art einer Konus-Spalt-Dichtung ausgebildetem Teil ausgestatteten erfindungsgemäßen Hochdruckdichtung.

Fig. 1 zeigt die im üblicherweise aus einem für Hochdruck-Apparaturen geeigneten, hochfesten, hochlegierten Stahl bestehenden Pumpengehäuse 22 angeordnete Bohrung 6, in welche eine Hülse 12 eingesetzt ist. Innerhalb dieser Hülse ist der oszillierend bewegbare Pumpen-Plunger 2, der z. B. aus Hartmetall gefertigt ist und eine Oberflächenrauheit im Bereich von 0,03 mm aufweisen kann, gleitend gelagert.

Gegen den Pumpenkopf, also nach außen hin, weist die Bohrung 6 eine erweiterte Einstichbohrung auf, welche eine Ausnehmung 11 für die Aufnahme des Dichtungsringes 3 bildet und den Anpreßring 14 trägt.

An die Hülse 12 schließt sich pumpenkopfseitig die den Plunger 2 satt umschließende Dichtungshülse 1 an, die in der gezeigten Anordnung keine Rillen aufweist.

Diese Dichtungshülse 1 ist ihrerseits von dem in der Ausnehmung 11 angeordneten, vorzugsweise aus einem Polytetrafluoräthylen-Compound-Werkstoff gefertigten Dichtungsring 3 mit im wesentlichen rechteckigem Querschnitt umschlossen. Dieser Ring 3 trägt an den drei Spalten jeweils Kammerringe 5 aus Stahl mit dreieckigem Profilquerschnitt. Diese Kammerringe dienen zur Armierung des Dichtungsringes und verhindern dessen Auskriechen. In Einzelheiten sind diese Ringe in der AT-B-296 700 beschrieben. An den Ring 3 schließt sich nach außen hin der die Dichtungshülse 1 an der Stirnfläche und im dortigen Mantelbereich umschließende L-förmige Anpreßring 14 an, der in der gezeigten Anordnung Bohrung(en) 19 zur Zufuhr von als Schmiermittel dienendem Öl sowie zur Abdichtung nach außen hin, einen den Plunger 2 umschließenden O-Ring 24 üblicher Bauart aufweist.

Der Anpreßring 14 wird mit der durch auf die im Pumpengehäuse verankerten Bolzen 25 aufgeschraubte Muttern 26 anziehbaren, stopfbüchsenbrillenartige Ausbildung aufweisenden Druckplatte 16, die eine Anpreßeinrichtung 9 bilden, axial gegen den Dichtungsring 3 gepreßt und dieser wandelt diese axial gerichteten Preßkräfte seinerseits in radial gerichtete Kräfte um, die auf die Außenmantelfläche der ringförmigen Dichtungshülse 1 wirken und deren Innenmantelfläche gegen die Oberfläche des Plungers 2, das Spiel verkleinernd, pressen. Je nach den mit den Muttern 26 einstellbaren axial gerichteten Kräften läßt sich auf diese Weise die radiale Anpreßkraft auf die Dichtungshülse 1 und damit die Breite des Spaltes zwischen Dichtungshülse 1 und Plunger 2 je nach dem zu beherrschenden Druck auf jeden gewünschten Wert einstellen, wodurch sowohl die Lebensdauer als auch die Dichtheit einstellbar ist.

Die Fig. 2 zeigt eine im Prinzip ähnliche Anordnung wie Fig. 1, nur weist dort die Bohrung 6 im Pumpengehäuse 22 auch im Bereich der Dichtung gleichmäßigen Querschnitt auf. Es ist dort in der Bohrung 6 auch keine Ausnehmung zur Aufnahme des Dichtungsringes 3 vorgesehen. Vielmehr sitzt in der Bohrung 6 im Bereich der Dichtungshülse 1, die sich wie bei der in Fig. 1 gezeigten Anordnung an die Hülse 12 pumpenkopfseitig anschließt und an ihrer Innenseite Rillen 13 aufweist, eine diese Hülse 1 umgebende Büchsenhülse 20, welche ihrerseits mit ihrer pumpenkopfseitigen Stirnfläche an den in der gezeigten Anordnung vier Stahl-Kammerringe 5 tragenden Dichtungsring 3 angrenzt.

Der Anpreßring 14 weist an seiner Innenseite ausmündende Zufuhrkanäle 19 für Schmiermittel und Dichtlippen 18 auf. Er ist in das Pumpengehäuse 22 eingesetzt und hält mit seinem Vorsprung 14a die Dichtungshülse 1 in Position und wird über die Druckplatte 16 mit axialer Kraft mit seiner Stirnfläche 14b auf den Dichtungsring 3 gepreßt, der seinerseits die Axialkraft in Radialkräfte umwandelnd auf den pumpenkopfseitigen Bereich des Außenmantels der Dichtungshülse 1 drückt und damit das Spiel deren Innenfläche zur Oberfläche des hin- und hergleitenden Plungers 2 einstellt.

Der dem Pumpeninneren zugekehrte Teil 1a der Dichtungs-Hülse 1 ist nach Art einer Hochdruck-Konus-Spalt-Dichtung mit gegen das Pumpeninnere gerichtetem, schwachem Konus ausgebildet. Der zwischen Innenfläche der Büchsenhülse 20 und Außenfläche der Hülse 1 befindliche, sich gegen den Pumpenkopf verengende Spalt steht unter Druck, wodurch die Innenfläche der Hülse 1 ebenfalls gegen den Plunger 2 gedrückt wird. Dadurch wird eine Art « Vordichtung » und damit Entlastung für die erfindungsgemäße Hochdruck-Dichtung erreicht.

**Patentansprüche**

1. Dichtung zum Abdichten von in Bohrungen druckbelastbarer Einrichtungen bewegbaren Teilen, wobei in einer Ausnehmung (11) der jeweiligen Einrichtung eine den bewegbaren Teil umgebende metallische Hülse (1) und ein mittels Anpreß-Einrichtung mit axialer Kraftwirkung beaufschlagbarer, zumindest einen Teilbereich des Außen-Mantels der Hülse umgebender, radiale Kraftwirkung ausübender Dichtungsring (3) mit im wesentlichen rechteckigem oder quadratischem Querschnitt angeordnet sind, dadurch gekennzeichnet, daß zum Abdichten von Hochdruck-Einrichtungen, vorzugsweise zum Abdichten von oszillierend bewegten Plungern bzw. Kolben (2) von Hochdruck-Pumpen oder von rotierenden Wellen von Hochdruck-Apparaturen, in, gegebenenfalls einer Ausnehmung (11), der Bohrung (6) der Hochdruckeinrichtung ein, die den Plunger bzw. Kolben (2) oder die Welle, vorzugsweise satt, umschließende, gleitfähige Dichtungshülse (1) vollumfänglich umschließender Dichtungsring (3) angeordnet ist, der zumindest an jenen Kanten, die an den unter Druck stehenden Spalten innerhalb der Hochdruck-Einrichtung angrenzen, mittels Kammerringen (5) aus hochfestem Metall armiert ist.

2. Dichtung nach Anspruch 1, dadurch gekennzeichnet, daß die vorzugsweise aus Stahl gefertigten, Kammerringe (5) des Dichtungsringes (3) dreieckigen Querschnitt aufweisen.

3. Dichtung nach Anspruch 1 oder 2, dadurch gekennzeichnet, daß die Hülse (1) in einer zu ihrer Aufnahme vorgesehenen Ausnehmung (11) der Bohrung (6) der Hochdruck-Einrichtung angeordnet ist.

4. Dichtung nach einem der Ansprüche 1 bis 3, dadurch gekennzeichnet, daß in einer gleichmäßigen Durchmesser aufweisenden Bohrung (6) der Hochdruck-Einrichtung eine Hülse (12) eingesetzt ist, die im wesentlichen ähnliche Querschnitts-Dimension aufweist, wie die Dichtungs-Hülse (1) und an diese gegen das Innere der Hochdruckeinrichtung anschließend angeordnet ist.

5. Dichtung nach einem der Ansprüche 1 bis 3, dadurch gekennzeichnet, daß in der gleichmäßigen Durchmesser aufweisenden Bohrung (6) der Hochdruck-Einrichtung eine Hülse (12) eingesetzt ist, und daß im Bereich der Bohrung (6) zwischen dem an die Dichtungs-Hülse (1) angrenzenden Ende der Hülse (12) und dem Dich-tungsring (3) eine Büchsenhülse (20) angeordnet ist.

6. Dichtung nach einem der Ansprüche 1 bis 5, dadurch gekennzeichnet, daß die Dichtungs-Hülse (1) aus Stahl oder einer Kupfer-Beryllium-Legierung gefertigt ist.

7. Dichtung nach einem der Ansprüche 1 bis 6, dadurch gekennzeichnet, daß die Dichtungs-Hülse (1) eine Länge aufweist, die gleich dem oder größer als deren Innendurchmesser ist.

8. Dichtung nach einem der Ansprüche 1 bis 7, dadurch gekennzeichnet, daß die Dichtungshülse (1) an ihrer Innenfläche quer zur Hülsen-Achse verlaufende, vorzugsweise etwa halbkreis- oder U-förmige, Rillen (13) aufweist.

9. Dichtung nach einem der Ansprüche 1 bis 8, dadurch gekennzeichnet, daß die Dichtungshülse (1) einen gegen das Innere der Hochdruck-Ein-richtung gerichteten, schwach konisch geform-ten, als Hochdruckkonus-Dichtung ausgebildeten Teil (1a) aufweist.

10. Dichtung nach einem der Ansprüche 1 bis 9, dadurch gekennzeichnet, daß der Dichtungsring (3) aus einem plastischen und/oder viskosen Material, vorzugsweise aus Kunststoff, gefertigt ist.

11. Dichtung nach Anspruch 10, dadurch gekennzeichnet, daß der Dichtungsring (3) aus einem Polymeren auf Tetrafluoräthylen-Basis gebildet ist.

12. Dichtung nach einem der Ansprüche 1 bis 11, dadurch gekennzeichnet, daß die auf den Dichtungsring (3) axiale Krafteinwirkung ausübende Anpreßeinrichtung (9) durch einen, vorzugsweise L-förmigen Querschnitt aufweisenden, Anpreßring (14) und eine diesen gegen den Dichtungsring (3) pressende mit variabler Belastung beaufschlagbare Stopfbüchsen-Brille (16) gebildet ist.

13. Dichtung nach Anspruch 12, dadurch gekennzeichnet, daß der Anpreßring (14) an seiner Innenfläche eine, gegebenenfalls mehrere Dichtlippen umfassende, Lippendichtung (18) trägt.

14. Dichtung nach Anspruch 13, dadurch gekennzeichnet, daß im Anpreßring (14) an dessen Innenfläche mündende Kanäle (19) für die Zufuhr eines Schmiermittels und Abfuhr von Leckage angeordnet sind.

**Claims**

1. A seal for sealing components displaceable in bores of pressure-loadable devices, a recess (11) in the device in question receiving a metal sleeve (1) which surrounds the displaceable component and a sealing ring (3) of substantially rectangular or square cross-section which can be acted upon with axial force by means of a pressing device, surrounds at least part of the area of the exterior casing of the sleeve and exerts a radial force, characterized in that, in order to seal high-pressure devices, preferably to seal plungers or pistons (2) — moved in an oscillating manner — of high-pressure pumps or of rotating shafts of high-pressure apparatus, a sealing ring (3), which encloses about its entire periphery the slidable sealing sleeve (1) enclosing the plunger or piston (2) or the shaft preferably in a closely fitting manner and which sealing ring is reinforced by means of chamber rings (5) of high-tensile strength metal at least on those edges which are adjacent to the gaps which are under pressure inside the high-pressure device, is disposed in, preferably in a recess (11) of, the bore (6) of the high-pressure device.

2. A seal according to Claim 1, characterized in that the chamber rings (5) — preferably made of steel — of the sealing ring (3) have a triangular cross-section.

3. A seal according to Claim 1 or 2, characterized in that the sleeve (1) is disposed in a recess (11) — provided for receiving it — in the bore (6) of the high-pressure device.

4. A seal according to any one of Claims 1 to 3, characterized in that a sleeve (12), which has a substantially similar cross-sectional dimension to the sealing sleeve (1) and is disposed adjacent to the latter against the interior of the high-pressure device, is inserted in a bore (6) of uniform diameter in the high-pressure device.

5. A seal according to any one of Claims 1 to 3, characterized in that a sleeve (12) is inserted in the bore (6) of uniform diameter in the high-pressure device, and a bushing sleeve (20) is disposed in the region of the bore (6) between the end of the sleeve (12) adjacent to the sealing sleeve (1) and the sealing ring (3).

6. A seal according to any one of Claims 1 to 5, characterized in that the sealing sleeve (1) is produced from steel or a copper-beryllium alloy.

7. A seal according to any one of Claims 1 to 6, characterized in that the sealing sleeve (1) has a length which is equal to or greater than its internal diameter.

8. A seal according to any one of Claims 1 to 7, characterized in that the inner surface of the sealing sleeve (1) has grooves (13) extending transversely to the axis of the sleeve and preferably semicircular or U-shaped.

9. A seal according to any one of Claims 1 to 8, characterized in that the sealing sleeve (1) has a portion (1a) which is orientated towards the interior of the high-pressure device, is shaped with a slight taper, and is in the form of a high-pressure cone seal.

10. A seal according to any one of Claims 1 to 9, characterized in that the sealing ring (3) is produced from a plastic and/or viscous material, preferably from synthetic material.

11. A seal according to Claim 10, characterized in that the sealing ring (3) is formed from a polymer on the basis of tetrafluoroethylene.

12. A seal according to any one of Claims 1 to 11, characterized in that the pressing device (9) exerting an axial force upon the sealing ring (3) is formed by a pressing ring (14), which preferably has an L-shaped cross-section, and a stuffing box gland (16) which presses the said pressing ring (14) against the sealing ring (3) and which can be acted upon with variable loading.

13. A seal according to Claim 12, characterized in that the inner surface of the pressing ring (14) has a lip seal (18) which comprises where appropriate a plurality of sealing lips.

14. A seal according to Claim 13, characterized in that ducts (19), which open on the inner surface of the pressing ring (14), are provided in the said pressing ring (14) in order to supply a lubricant and to remove leaks.

## Revendications

1. Joint destiné à assurer l'étanchéité de pièces se mouvant dans des alésages de dispositifs soumis à une charge de pression, dans lequel sont disposés dans un évidement (11) du dispositif intéressé une douille (1) métallique entourant la partie mobile et un anneau d'étanchéité (3) de section transversale sensiblement rectangulaire ou carrée pouvant être soumis au moyen d'un dispositif de serrage à un effet de force axial, entourant au moins en partie la surface latérale extérieure de la douille et exerçant un effet de force dirigé dans le sens radial, caractérisé en ce que, pour assurer l'étanchéité de dispositifs haute pression, de préférence l'étanchéité de plongeurs ou de pistons (2) à mouvement oscillant de pompes haute pression, ou encore d'arbres rotatifs d'appareillages haute pression, est disposé dans l'alésage (6) ou éventuellement dans un évidement (11) de l'alésage (6) du dispositif haute pression un anneau d'étanchéité (1) entourant sur toute circonférence la douille d'étanchéité (1) coulissante qui entoure, de préférence sans intervalle, le plongeur ou piston (2) ou l'arbre, cet anneau d'étanchéité étant armé au moyen d'anneaux à chambre (5) en métal de haute résistance, au moins sur les arêtes qui jouxtent les interstices soumis à la pression à l'intérieur du dispositif haute pression.

2. Joint d'étanchéité selon la revendication 1, caractérisé en ce que les anneaux à chambre (5), de préférence en acier, de l'anneau d'étanchéité (3) ont une section transversale triangulaire.

3. Joint d'étanchéité selon la revendication 1 ou 2, caractérisé en ce que la douille (1) est disposée dans un évidement (11) de l'alésage (6) du dispositif haute pression prévu pour son logement.

4. Joint d'étanchéité selon une quelconque des revendications 1 à 3, caractérisé en ce que, dans un alésage (6) de diamètre uniforme du dispositif haute pression est engagée une douille (12) qui présente une dimension de section transversale sensiblement analogue à celle de la douille d'étanchéité (1) et est disposée à la suite de celle-ci en direction de l'intérieur du dispositif haute pression.

5. Joint d'étanchéité selon une quelconque des revendications 1 à 3, caractérisé en ce que, dans l'alésage (6) du dispositif haute pression présentant un diamètre uniforme, est engagée une douille (12) et que dans la zone de l'alésage (6) comprise entre l'extrémité de la douille (12) jouxtant la douille d'étanchéité (1) et l'anneau d'étanchéité (3) est disposé un fourreau (20).

6. Dispositif selon une quelconque des revendications 1 à 5, caractérisé en ce que la douille d'étanchéité (1) est en acier ou en alliage cuivre-béryllium.

7. Joint d'étanchéité selon une quelconque des revendications 1 à 6, caractérisé en ce que la douille d'étanchéité (1) a une longueur qui est égale ou supérieure à son diamètre intérieur.

8. Joint d'étanchéité selon une quelconque des revendications 1 à 7, caractérisé en ce que la douille d'étanchéité (1) possède sur sa surface intérieure des rainures (13), de préférence sensiblement semi-circulaires ou en U, dirigées transversalement par rapport à l'axe de la douille.

9. Joint d'étanchéité selon une quelconque des revendications 1 à 8, caractérisé en ce que la douille d'étanchéité (1) possède une partie (1a) en forme de joint conique haute pression formant un cône faible dirigé vers l'intérieur du dispositif haute pression.

10. Joint d'étanchéité selon une quelconque des revendications 1 à 9, caractérisé en ce que l'anneau d'étanchéité (3) est fait en matériau plastique et/ou visqueux, de préférence en matière synthétique.

11. Joint d'étanchéité selon la revendication 10, caractérisé en ce que l'anneau d'étanchéité (1) est fait en polymère à base de tétrafluoréthylène.

12. Joint d'étanchéité selon une quelconque des revendications 1 à 11, caractérisé en ce que le dispositif de serrage (9) exerçant sur l'anneau d'étanchéité (1) un effet de force dans le sens axial est formé par un anneau de serrage (14) ayant de préférence une section transversale en L et par une bride presse-étoupe (16) pouvant être soumise à une charge variable et serrant ledit anneau de serrage contre l'anneau d'étanchéité (1).

13. Joint d'étanchéité selon la revendication 12, caractérisé en ce que l'anneau de serrage (14) porte sur sa surface intérieure un joint à lèvres (18) comprenant éventuellement plusieurs lèvres d'étanchéité.

14. Joint d'étanchéité selon la revendication 13, caractérisé en ce que des canaux (19) pour l'arrivée d'un lubrifiant et pour l'évacuation des fuites et coulures sont disposés dans l'anneau de serrage (14), débouchant à sa surface intérieure.

FIG.1

0 072 366

FIG.2

22    19    16

9

2

6   12   20   13   1a   1   13   5   3   14b   14a   18   18   14

0 072 366